# EUROPÄISCHE PATENTSCHRIFT

(11) **EP 3 299 091 B1**
(45) Veröffentlichungstag und Bekanntmachung des Hinweises auf die Patenterteilung: **31.07.2019**
(21) Anmeldenummer: 17192311.3
(22) Anmeldetag: 21.09.2017
(51) Int. Cl.: B21D 5/14, B21D 53/10, F16F 1/38, B21C 37/30

(54) **VERFAHREN ZUR HERSTELLUNG EINER GESCHLITZTEN BUCHSENLAGERHÜLSE**
METHOD FOR MANUFACTURING A SLOTTED BEARING HOUSING
PROCÉDÉ DE FABRICATION D'UNE DOUILLE DE PALIER FENDUE

(30) Priorität: 21.09.2016 DE 102016117764
(43) Veröffentlichungstag der Anmeldung: 28.03.2018
(73) Patentinhaber: VORWERK AUTOTEC GmbH & Co. KG, 42287 Wuppertal (DE)
(72) Erfinder: Beneker, Wilfried, 42799 Leichlingen (DE); Röder, Frank, 45549 Sprockhövel (DE)
(74) Vertreter: Lippert Stachow Patentanwälte Rechtsanwälte

(56) Entgegenhaltungen:
- EP-A1- 0 529 629
- DE-A1-102014 108 972
- JP-A- S59 179 249
- JP-A- S60 145 223
- JP-A- 2012 183 577

## Beschreibung

Die Erfindung betrifft ein Verfahren zur Herstellung einer beschichteten, in Längsrichtung geschlitzten Buchsenlagerhülse, deren umfangsseitigen Stirnflächen einen vorgegebenen Abstand zueinander aufweisen.

Derartige Buchsenlagerhülsen werden insbesondere zur Herstellung von Buchsenlagern in der Art eines Gummi-Metall-Lagers eingesetzt, bei welchen um einen Metallkern ein Elastomerkörper, insbesondere ein Gummikörper, angeordnet ist, wobei das Lager durch eine radial außenliegende Buchsenlagerhülse abgeschlossen sein kann. Ein so gestaltetes Buchsenlager kann für unterschiedliche Anwendungsgebiete eingesetzt werden, insbesondere in der Fahrzeugindustrie.

Um eine der Lebensdauer eines solchen Lagers stark abträgliche Zugbelastung im Betrieb zu vermeiden, werden derartige Buchsenlager häufig unter radialer Vorspannung des Elastomers in ein zugeordnetes Lagerauge, beispielsweise im Bereich der Radaufhängung eines Kfz, eingesetzt. Zu diesem Zweck kann sowohl der Elastomerkörper als auch die außen liegende Lagerhülse über ihre jeweilige Längserstreckung einen Schlitz aufweisen, die vor der Einbringung in das zugeordnete Lagerauge durch Aufbringen einer radialen Kraft und damit Einstellen einer Vorspannung im Elastomer geschlossen werden.

Wenn der Elastomerkörper selbst keine Zwischenlagen aus Kunststoff oder Metall aufweist, wird zur Herstellung des Buchsenlagers der Kern und die äußere, geschlitzte Buchsenlagerhülse in eine entsprechend ausgebildete Spritzgießform eingesetzt und der zwischen diesen beiden Teilen angeordnete Elastomerkörper angespritzt. Um beim nachfolgenden Vulkanisiervorgang eine stoffschlüssige Verbindung zwischen dem Elastomerkörper und dem Innenkern sowie der außen angeordneten Buchsenlagerhülse sicherzustellen, werden der Innenkern auf seiner Außenseite und die Lagerhülse auf ihrer Innenseite i.d.R. mit einem harzbasierenden Reaktionskleber als Haftvermittler beschichtet.

Herkömmlicherweise wird die geschlitzte Buchsenlagerhülse durch Anwendung eines Stanz-Biegeverfahrens hergestellt, bei welchem nach dem Ausstanzen eines Blechstreifens dieser mittels eines U-förmigen Arms um einen Zylinder umgebogen wird. Dabei wird zur Vermeidung des Rückfederns an dessen umfänglichen Enden das Material gestaucht, wodurch der ursprüngliche Blechstreifen etwas länger ausgebildet sein muss als der Umfang der fertiggestellten Hülse abzüglich der umfänglichen Ausdehnung des Schlitzes. Darüber hinaus wird das beschriebene herkömmliche Stanz-Biegeverfahren zur Herstellung der Buchsenlagerhülse unter Verwendung eines Umformöls durchgeführt, sodass die Hülse nach ihrer Herstellung aufwendig gereinigt werden muss bzw. die an der Innenseite der Hülse angeordnete Haftvermittlerschicht mit Umformöl kontaminiert ist, was die Realisierung eines Stoffschlusses zwischen Hülse und Elastomerkörper in den weiteren Herstellungsschritten des Buchsenlagers erschweren kann. Darüber hinaus wird auch an den umfänglichen Stirnseiten der Hülse durch deren Stauchung die Haftvermittlerschicht beschädigt, sodass insbesondere an den umfänglichen Ansatzstellen des Elastomers an der Hülse im fertiggestellten Lager kein optimaler Stoffschluss bereitgestellt werden kann.

Die Offenlegungsschrift DE 10 2014 108 972 A1 betrifft ein Verfahren zur Herstellung eines Elastomerlagers mit einem metallenen Innenteil sowie einem das Innenteil zumindest teilweise umgebenden elastomeren Lagerkörper und einer das Lager radial abschließenden Außenhülse, die über ihre gesamte Längserstreckung geschlitzt ist. Dabei kann die aus einem Metall oder einem Kunststoff bzw. einem Verbundstoff hergestellte Außenhülse zusammen mit dem Elastomerkörper durch Spritzgießen und durch Vulkanisieren mit dem Elastomerkörper verbunden sein. Die Offenlegungsschrift EP 0 529 629 A1 betrifft ein einstellbares Lager, umfassend elastische Polymerhülsen mit einem äußeren Metallrohr, einem inneren Metallrohr und einem zwischen dem inneren und dem äußeren Rohr befestigten elastischen Polymereinsatz. Das äußere Metallrohr kann dabei einen sich axial erstreckenden Schlitz aufweisen. Durch eine in Umfangsrichtung erfolgende Kompression und durch eine plastische Verformung des äußeren Rohrs kann dessen Umfang geringfügig reduziert werden, sodass das äußere Rohr im Presssitz in einer zugeordneten Öffnung montiert werden kann. Dabei ist das äußere Rohr aus einem Material gebildet, dessen Festigkeit oder Formerinnerungsvermögen ausreichend hoch ist, um eine Verformung durch eine Federkraft des elastischen Polymereinsatzes im Kompressionszustand standzuhalten. Je nach Ausführungsform kann das äußere Rohr eine sich axial erstreckende, nach innen gerichtete Biegung, an jedem seiner Enden eine radial nach innen gerichtete, ringförmige Lippe und/oder auch eine axiale Wellung, die sich radial um den gesamten Umfang des äußeren Elementes erstreckt, aufweisen. Die Offenlegungsschrift JP 2012 183577 betrifft ein Verfahren zur Herstellung eines zylindrischen Gegenstandes mit einem Schlitz, der sich entlang einer axialen Richtung erstreckt, wobei der Gegenstand einen konvexen Abschnitt aufweist, der zu einer äußeren Oberflächenseite vorsteht. Dabei wird in einem ersten Schritt an einem plattenförmigen Material ein konvexer, vorstehender Abschnitt erzeugt und in einem zweiten Schritt der zylindrische Gegenstand durch Walzbiegen des im ersten Schritt erzeugten Objektes gebildet. Die Offenlegungsschrift JP S 60145223 betrifft ein Walzbiegeverfahren zur Herstellung eines rohrförmigen Produktes, wobei ein Plattenmaterial zwischen einer oberen Walze und einer unteren Walze eingespannt sind. Dabei wird beim Umformprozess die untere Walze gedreht und die obere Walze in ihrem mittleren Abschnitt nach unten gedrückt, wodurch das zwischen beiden Walzen bewegte Plattenmaterial eine Krümmung erhält, die durch die Annäherung der oberen Walze an die untere Walze einstellbar ist. Nach der Umformung des Plattenmaterials über dessen etwa hälftige Längserstreckung wird der Druck der oberen Walze auf die untere Walze entfernt, das Plattenmaterial durch Weiterdrehen der unteren Walze bis an ein axiales Ende des Plattenmaterials weitertransportiert, dann die Drehrichtung der unteren Walze umgekehrt und die obere Walze wieder an die untere Walze angedrückt, sodass die zweite axiale Erstreckungshälfte des plattenförmigen Materials umgeformt wird mit einer Krümmung zur Herstellung einer geschlitzten Zylinderhülse. Die Offenlegungsschrift JP S 59179249 betrifft die Bearbeitung eines plattenartigen Rohlings zu einem gekrümmten Teil. Dabei wird eine elastische Rolle aus einem elastischen Material wie Polyurethangummi an einer Antriebswelle befestigt, wobei eine starre Rolle aus Eisen, Stahl etc. frei drehbar daran abrollt. Ein Bimetallrohling, der aus einem Lagermaterial und einem Trägerteil besteht, wird zwischen den beiden Rollen bzw. Walzen eingefügt, sodass das Lagermaterial die starre Walze berührt. Der Bimetallrohling läuft zwischen den beiden Walzen, wobei er sich auf der Seite der starren Walze krümmt zur Gestaltung einer zylinderförmigen Hülse.

Der Erfindung liegt die Aufgabe zugrunde, die beschriebenen Nachteile bei der Herstellung eines Buchsenlagers bzw. einer geschlitzten Buchsenlagerhülse zumindest teilweise zu beheben.

Diese Aufgabe löst die vorliegende Erfindung schon mit einem Verfahren zur Herstellung einer zumindest einseitig mit einem Haftvermittler beschichteten, in Längsrichtung geschlitzten Buchsenlagerhülse, deren umfangsseitigen Stirnflächen einen vorgegebenen Abstand zueinander zur Bereitstellung eines Spaltes aufweisen mit den Merkmalen von Anspruch 1. Das erfindungsgemäße Verfahren umfasst die Schritte:
- Bereitstellen einer, auf einem Bandabroller angeordneten Metallbandrolle, wobei das Metallband zumindest einseitig mit einem Haftvermittler beschichtet ist;
- Abrollen des Metallbandes und optionales Zuführen des beschichteten Metallbandes zu einer Walzprofiliereinrichtung, in welcher das Metallband zwischen rotierenden Ober- und Unterrollen längsprofiliert wird;
- Zuführen des beschichteten Metallbandes an eine Trenneinrichtung, insbesondere eine Trennschereneinrichtung;
- Ablängen eines beschichteten Blechstreifens mit vorgegebener Länge in der Trenneinrichtung;
- Zuführen des beschichteten Blechstreifens in eine Zweiwalzen-Blechbiegeeinrichtung, bei welcher ein Wickeldorn in radialer Richtung kraftbeaufschlagt auf dem Umfang einer, einen zum Wickeldorn elastischen Walzenkörper aufweisenden Umformwalze abrollt, wobei die Achsen des Wickeldorns und der Umformwalze im Wesentlichen parallel zueinander verlaufen und wobei die Mantelfläche des Wickeldorns entsprechend der Profilierung des Blechstreifens konturiert ist und der Durchmesser der Umformwalze mehr als das Dreifache des Durchmessers des Wickeldorns beträgt;
- Umformen des beschichteten Blechstreifens in der Zweiwalzen-Blechbiegeeinrichtung in eine geschlitzte Hülse durch das Bewegen des Blechstreifens senkrecht zu den Achsen des Wickeldorns und der Umformwalze und zwischen diesen, wodurch das Blechstreifen um den Wickeldorn gewickelt wird;
- Relatives voneinander Wegbewegen von Umformwalze und Wickeldorn und axiales Abführen der geschlitzten Hülse vom Wickeldorn;
- Aufnehmen und Einsetzen der Hülse in eine Kalibriereinrichtung;
- Kalibrieren der Hülse in der Kalibrierstation in eine kalibrierte, geschlitzte Buchsenlagerhülse mit vorgegebenem Abstand der beiden sich gegenüberliegenden Umfangsstirnflächen und mit vorgegebenem Durchmesser der Hülse.

Mit dem erfindungsgemäßen Verfahren kann beispielsweise eine beschichtete Zylinderhülse mit vollständiger Rotationssymmetrie um ihre Längsachse hergestellt werden, welche in Bezug auf ihre Materialdicke identisch oder zumindest im Wesentlichen identisch ist mit der des Blechstreifens vor der Umformung. Ferner kann gleichzeitig vermieden werden, dass insbesondere eine auf der Innenseite der späteren Hülse angeordnete Beschichtung während der Umformung beschädigt wird. Das erfindungsgemäße Verfahren eignet sich insbesondere für die Herstellung von an ihren Längskanten profilierten Buchsenlagerhülsen, wie sie für die Herstellung von Buchsenlagern zur Anwendung kommen können, wobei die profilierten Längskanten insbesondere ein Auswandern des Elastomers in axialer Richtung beim Auftreten entsprechender Betriebskräfte wesentlich abschwächen oder gar verhindern können. Eine nach dem erfindungsgemäßen Verfahren hergestellte Buchsenlagerhülse kann beispielsweise als Einleger im Gummikörper des Buchsenlagers angeordnet werden, insbesondere zur Einstellung der radialen Kennung des Lagers. In einer weiteren Abwendung kann die erfindungsungemäß hergestellte Buchsenlagerhülse auch als Außenhülse eines solchen Buchsenlagers eingesetzt werden, wobei die Hülse mit ihrer Außenmantelfläche sich dann in einem entsprechend gestalteten Lagerauge zur Übertragung der Betriebskräfte des Lagers abstützt.

Mit dem erfindungsgemäßen Verfahren kann durch die Umformung des Blechstreifens in einer 2-Walzen-Blechbiegeeinrichtung mit einer nachgeschalteten Kalibrierung der Hülse in einer Kalibriereinrichtung eine bislang nicht erreichte Maßhaltigkeit der Schlitzbreite und des Hülsendurchmessers der Buchsenlagerhülse bereitgestellt werden, kombiniert mit einer Unversehrtheit der Beschichtung, wodurch ein nachfolgender Spritzgieß- und Vulkanisiervorgang mit hoher Präzision durchgeführt werden kann zur Herstellung eines besonders zuverlässigen und langlebigen Metall/Gummi-Buchsenlagers. Je nach Anwendung kann das Blechband optional in einer Walzprofiliereinrichtung vor der Umformung des abgelängten Streifens in der 2-Walzen-Blechbiegeeinrichtung profiliert werden.

Darüber hinaus kann mit dem erfindungsgemäßen Verfahren der Aufwand für die Gestaltung der Umformvorrichtung zur Umformung des Bleches in eine Hülse vermindert werden, da für die Umformung des Blechstreifens nur zwei walzenartige Teile notwendig sind, deren Achsen parallel zueinander ausgerichtet sind, wobei das Teil mit geringerem Durchmesser auf dem Teil mit größerem Durchmesser kraftbeaufschlagt abrollt. Dadurch, dass der Walzenkörper der größeren Walze gegenüber dem Walzenkörper des Wickeldorns ein elastisches Material umfasst, kann sich der Wickeldorn in die Umformwalze eindrücken, wobei der Blechstreifen zwischen Umformwalze und Wickeldorn innerhalb dieses Kontaktbereichs umgeformt wird. Dabei wird der Blechstreifen weniger punktuell als vielmehr flächig kraftbeaufschlagt, so dass eine Verletzung der Oberfläche des Blechstreifens bzw. der Beschichtung im Wesentlichen vermieden werden kann. Die der Zweiwalzen-Blechbiegeeinrichtung nachgeschaltete Kalibriereinrichtung stellt im Vergleich zu der Umformeinrichtung des oben beschriebenen Standes der Technik einen verminderten Aufwand dar, da in der Kalibriereinrichtung die schon in der Zweiwalzen-Blechbiegeeinrichtung hergestellte Hülse allein in Bezug auf ihre Maße, d.h. den vorgegebenen Abstand der beiden sich gegenüberliegenden Umfangsstirnflächen sowie den Durchmesser der Hülse kalibriert wird. Die Umformung der Hülse in der Kalibriereinrichtung ist im Vergleich zur Blechbiegeeinrichtung sehr gering und damit auch eine mögliche Gefahr für die Beschädigung der Beschichtung der Hülse.

Das erfindungsgemäße Verfahren kann mit dem gleichen obenstehend angegebenen Vorteil auch dazu genutzt werden, eine geschlitzte Buchsenlagerhülse herzustellen, welche sowohl an ihrer Innenseite als auch an ihrer Außenseite mit einem Haftvermittler beschichtet ist. Eine derartige Buchsenlagerhülse kann wie obenstehend schon angegeben als Zwischenlagenhülse, die auch als Einlegerhülse bezeichnet wird, innerhalb eines Elastomerkörpers zur Bereitstellung einer Zwischenlage eingesetzt werden, um die radiale Steifigkeit eines fertiggestellten Buchsenlagers zu erhöhen, wobei das Gummimaterial zu beiden radialen Seiten der Einlegerhülse über den Haftvermittler stoffschlüssig mit der Einlegerhülse verbunden sein kann.

Weitere erfindungsgemäße Merkmale sowie Weiterbildungen der Erfindung sind in der allgemeinen Beschreibung, der speziellen Beschreibung, den Figuren sowie in den Unteransprüchen angegeben.

Erfindungsgemäß ist zumindest die Mantelfläche des Wickeldorns an die Profilierung des Blechstreifens angepasst, genauer angepasst an die Seitenfläche des Blechstreifens, welche dem Wickeldorn zugewandt ist und insofern an dessen Mantelfläche anliegt. Durch eine solche, an die zugeordnete Seitenfläche des Blechstreifens konturierte Mantelfläche des Wickeldorns wird erreicht, dass der Blechstreifen über seine diesbezügliche Seitenfläche vollflächig an der Mantelfläche des Wickeldorns anliegt, so dass auch die Konturierungsabschnitten des Blechstreifens in der Zweiwalzen-Blechbiegeeinrichtung in Bezug auf die Krümmung der Hülse umgeformt sind, ohne dass die Profilierungen und/oder die zumindest eine Beschichtung Beschädigungen erleidet.

In einer weiteren Ausführungsform zur nochmaligen Verbesserung der Umformung eines Blechstreifens in eine Hülse unter Beibehaltung der Profilierung des Blechstreifens kann zweckmäßigerweise vorgesehen sein, dass auch die Umformwalze entsprechend an die Profilierung der dem Blechstreifen zugewandten Seitenfläche angepasst bzw. konturiert ist.

In einer besonderen Ausführungsform kann das erfindungsgemäßen Verfahren auch so ausgebildet sein, dass die hergestellte Hülse in Bezug auf ihre umfängliche Erstreckung ohne Berücksichtigung der umfänglichen Erstreckung des zwischen den umfangsseitigen Stirnflächen der Hülse angeordneten Spaltes identisch oder zumindest im Wesentlichen identisch ist mit der Längserstreckung des Blechstreifens vor der Umformung. Dies steht im Gegensatz zu Ergebnis des herkömmlichen Stanz-Biegeverfahrens, das einhergeht mit einer Stauchung des Materials im Bereich der umfangsseitigen Stirnflächen, um zum einen den vorgegebenen Radius der Hülse bereitzustellen und ein Rückfedern der Blechenden zu vermeiden und zum anderen den vorgegebenen Abstand zwischen den umfangsseitigen Stirnflächen zur Bereitstellung der vorgegebenen Schlitzbreite einzustellen. Bei dem erfindungsgemäßen Verfahren sind derartige Stauchungen an den umfangsseitigen Stirnflächen zur Gestaltung einer Hülse mit kreisförmiger Grundfläche nicht notwendig, insofern kann die Geometrie der hergestellten Hülse mit dieser Ausführungsform des erfindungsgemäßen Verfahrens verbessert werden. Ferner kann aufgrund des Wegfalls einer zusätzlichen Stauchung des Bleches Material im Prozentbereich eingespart und gleichzeitig wiederum vermieden werden, dass die Beschichtung bei der Umformung des Streifens in eine Hülse beschädigt wird. Eine solche Stauchung kann beim erfindungsgemäßen Verfahren auch bei der Kalibrierung der Hülse aufgrund der dann auftretenden sehr geringen Umformung im Wesentlichen vermieden werden.

Zweckmäßigerweise können die Betriebsparameter der Biegemaschine so eingestellt werden, dass der Wickeldorn von der Umformwalze umschlungen wird, wobei der Blechstreifen dem Umschlingungsbereich zwischen Umformwalze und Wickeldorn zu dessen Umformung zugeführt wird. Dieser Umschlingungswinkel kann durch Festlegung der Elastizität des Walzenkörpers der Umformwalze und durch Festlegung der Kraftbeaufschlagung auf den Wickeldorn in Abhängigkeit von Material und Dicke des Blechstreifens angepasst werden. Dabei können die Betriebsparameter für die Umformung derart eingestellt werden, dass die Umschlingung der Umformwalze schon vorliegt, wenn der Blechstreifen noch nicht in den Umformbereich zwischen Wickeldorn und Umformwalze eingebracht ist. In einer anderen Ausführungsform können die Betriebsparameter für die Umformung so gewählt sein, dass erst mit der Einführung des Blechstreifens in den Umformbereich eine Umschlingung des Blechstreifens bzw. des Wickeldorns aufgrund der endlichen Dicke des Blechstreifens auftritt.

Das erfindungsgemäße Verfahren kann beispielsweise zur Umformung von beschichteten Blechen aus Aluminiumlegierungen als auch aus Eisenlegierungen verwendet werden. Typische Blechstreifenlängen können etwa 100 mm bis 150 mm betragen.

Je nach Ausführungsform kann der axial verlaufende Spalt zwischen den beiden umfänglichen Stirnseiten der Hülse typischerweise zwischen 5 mm bis 12 mm betragen. Die Dicke der umzuformenden Blechstreifen kann je nach Ausführungsform etwa zwischen 1 mm bis 2,5 mm betragen. Die Breite des Blechstreifens und damit die Höhe der herzustellenden Buchsenlagerhülse können je nach Ausführungsform beispielsweise zwischen 15 mm bis 40 mm, insbesondere zwischen 18 mm und 36 mm betragen.

Es hat sich für die Maßhaltigkeit der produzierten Lagerhülsen als zweckmäßig herausgestellt, in der Blechbiegeeinrichtung allein die Umformwalze direkt motorisch anzutreiben, sodass der Wickeldorn in dieser Ausführungsform der Erfindung allein durch den Reibschluss zur Umformwalze bewegt wird. Darüber hinaus kann es zweckmäßig sein, beim Umformprozess in der Blechbiegeeinrichtung die Umformwalze zur gleichförmigen Bewegung anzutreiben, sodass während des gesamten Umformprozesses des Blechstreifens in dieser Ausführungsform die Umformwalze mit konstanter Winkelgeschwindigkeit dreht.

Je nach Material und Materialstärke des umzuformenden Blechstreifens können die Materialien von Umformdorn und Umformwalze sowie die Kraftbeaufschlagung auf den Umformdorn in radialer Richtung zur Erzeugung eines Umschlingungsbereichs ausgewählt werden. Als zweckmäßig, insbesondere für die Umformung von Aluminiumblechen mit Dicken von 1 mm bis 2,5 mm, hat sich herausgestellt, die Umformwalze mit einem zylindrischen Walzenkörper auszubilden mit einer Shore-A-Härte > 70, insbesondere > 80. Zweckmäßigerweise kann auch der Walzenkörper des Umlenkdorns zylindrisch ausgebildet sein, insbesondere aus einem gehärteten Werkzeugstahl. Vorzugsweise kann die Kraftbeaufschlagung des Wickeldorns auf die Umformwalze zentrisch erfolgen, d.h. durch den Mittelpunkt der Umformwalze. Typische Kräfte liegen zwischen 5 kN bis 10 kN, mit welcher der Umlenkdorn während der Umformung auf den Walzenkörper gedrückt wird. In einer Ausführungsform der Erfindung wird die angegebene Kraft während des Umformprozesses konstant gehalten. In einer anderen Ausführungsform kann diese auch zeitlich variabel gestaltet sein.

Besonders zweckmäßig ist es, wenn der Umformprozess in der Blechbiegeeinrichtung trocken ausgeführt wird, d.h. ohne die Zugabe von Umformöl, sodass die Haftvermittlerbeschichtung am Blechstreifen in ihrer Funktion nicht beeinträchtigt wird. Aus den gleichen Erwägungen kann es zweckmäßig sein, die Kalibrierung der Hülse trocken auszuführen.

Vorzugsweise wird beim Umformprozess des Blechstreifens in der Blechbiegeeinrichtung dieser zumindest einmal um den Wickeldorn herumgeführt, wobei die angetriebene Umformwalze und damit auch der Blechstreifen gestoppt werden kann, wenn sich der Schlitzabschnitt der jeweiligen Hülse im Bereich des Umschlingungsbereichs zwischen Umformwalze und Wickeldorn befindet. Durch diese Maßnahme kann eine definierte Lage des Blechstreifens nach dem Umformprozess in der Blechbiegeeinrichtung bereitgestellt werden, so dass mit einer vorgegeben Orientierung der Hülse diese aus der Blechbiegeeinrichtung entnommen werden kann. Dies kann erfindungsgemäß vorzugsweise dadurch erreicht werden, dass in der beschriebenen Lage von Hülse, respektive deren Schlitzabschnitt, zur Walze und zum Wickeldorn, d. h. innerhalb des Umschlingungsbereichs, die Hülse zwischen Umformwalze und Wickeldorn definiert eingeklemmt ist, da sich die Umformwalze durch die Druckbeaufschlagung und ihrer Elastizität abschnittsweise in den Schlitzabschnitt der Hülse hineinerstreckt. Damit ist die Hülse durch den beschriebenen Formschluss in tangentialer, d.h. Umfangsrichtung auch gegen äußere Kräfte, welche beispielsweise auftreten durch das Greifen der Hülse mittels einer Greifereinrichtung, fixiert. Darüber hinaus lässt sich die Lage des Schlitzes der Hülse innerhalb des Umschlingungsbereiches besonders gut über einen Sensor erfassen, was für die Steuerung der Blechbiegeeinrichtung vorteilhaft ist.

Besonders zweckmäßig kann es sein, wenn der Blechstreifen nur ein einzelnes Mal um den Wickeldorn herumgeführt wird und nach der beschriebenen Klemmung der Hülse zwischen Umformwalze und Wickeldorn aus der Blechbiegeeinrichtung entnommen wird.

Die Maßhaltigkeit der Hülse, insbesondere ihres Innendurchmessers und ihres umfänglichen Spaltes für den nachgeschalten Kalibrierprozess kann u.U. dadurch erhöht werden, dass der Blechstreifen mehrmals durch den Umschlingungswinkelbereich zwischen Wickeldorn und Umformwalze bewegt wird. Dabei kann es zweckmäßig sein, wenn der Blechstreifen nach dem ersten Durchlaufen des Umschlingungswinkelbereichs vom Wickeldorn mitgenommen und anschließend wieder in den Umschlingungswinkelbereich zur weiteren Umformung eingeführt wird. Je nach Ausführungsform kann dieser Vorgang mehrmals wiederholt werden.

Die Kalibrierung der in der Blechbiegeeinrichtung erzeugten Hülse erfolgt in einer Kalibriereinrichtung, wobei die Hülse in eine Kalibrierbacke eingesetzt und eine weitere Kalibrierbacke relativ zur ersten Kalibrierbacke linear und senkrecht zur Achse der Hülse bewegt werden kann. Zweckmäßigerweise können die Kalibrierbacken beim Kalibrierprozess die Außenmantelfläche der Hülse vollumfänglich umfassen, so dass der Durchmesser der Hülse bzw. dessen Umfangslänge definiert festgelegt wird. Dabei können die Kalibrierbacken jeweils als Kalibrierbackenhalbschalen ausgebildet sein.

Zur definierten Einstellung der Schlitzbreite der Hülse kann zweckmäßigerweise vorgesehen sein, dass an einer Kalibrierbacke ein entsprechender radial nach innen und sich axial erstreckender Vorsprung angeordnet ist und die geschlitzte Hülse so in die andere Kalibrierbacke eingesetzt wird, dass beim Aufeinanderzubewegen beider Kalibrierbacken der sich nach innen erstreckende Vorsprung in den Schlitz der Hülse eingreift zum maßhaltigen Einstellen der Schlitzbreite der Buchsenlagerhülse. Die tangentiale Erstreckung des Vorsprungs kann dabei an die Sollschlitzbreite der Buchsenlagerhülse angepasst sein.

Erfindungsgemäß wird beim Kalibriervorgang zum einen die beschriebene Maßhaltigkeit für die Buchsenlagerhülse sichergestellt und wird zum anderen auch Asymmetrien im Bereich der Schnittkante behoben, die insbesondere bei einem nachfolgenden Spritzgießprozess zur Herstellung eines Gummi/Metallbuchsenlagers hinderlich sein können.

Um vorgegebene Sollmaße der Buchsenlagerhülse sowohl an der Außenmantelfläche als auch an der Innenmantelfläche bereitzustellen, kann zweckmäßigerweise vorgesehen sein, dass beim Kalibrieren zur Festlegung eines umlaufenden Innenmantelflächenabschnittes der Buchsenlagerhülse ein Kalibrierkern in axialer Richtung in die Hülse eingesetzt wird, an den sich der besagte Innenmantelflächenabschnitt der Buchsenlagerhülse während des Kalibriervorganges anschmiegen kann. Vorzugsweise kann vorgesehen sein, dass der Kalibrierkern mehrteilig ausgebildet ist.

Das erfindungsgemäße Verfahren zur Herstellung einer geschlitzten Buchsenlagerhülse kann die Längsprofilierung des Metallbandes in einer Walzprofiliereinrichtung umfassen vor der Umformung des Metallbandes in eine Hülse, insbesondere zur Einstellung axialer bzw. radialer Kennungsparameter eines Metall/Gummi-Buchsenlagers, das zumindest eine nach dem erfindungsgemäßen Verfahren hergestellte Buchsenlagerhülse umfasst. Je nach Ausführungsform kann die Längsprofilierung im Bereich der Längskanten des Blechstreifens durchgeführt werden, beispielsweise durch Einbringung einer S-Schlag- oder Doppel-S-Schlagprofilierung an einer oder beiden Längskanten. Die Profilierung an den beiden Längskanten kann je nach Anwendungsfall des Buchsenlagers auch unterschiedlich sein. In einer anderen Ausführungsform kann auch vorgesehen sein, die Profilierung im Bereich eines Mittenabschnittes des beschichteten Metallbandes, insbesondere in Form einer konkaven oder konvexen Profilierung in das Metallband einzubringen zur Einstellung vorgegebener Kennungsparameter des fertiggestellten Lagers.

Die zur Durchführung des erfindungsgemäßen Verfahrens verwendete erfindungsgemäße Vorrichtung kann eine Hintereinanderschaltung einer Vielzahl von Stationen umfassen, beispielsweise ausgehend einen Bandroller zum Abrollen des beschichteten Metallbandes, eine optionale Walzprofiliereinrichtung, der nachgeschaltet eine Trenneinrichtung wie eine Trennschereneinrichtung angeordnet ist, der wiederum eine Zweiwalzen-Blechbiegeeinrichtung nachgeschaltet ist, deren Umformprodukt, d. h. die geschlitzte Hülse, dann einer Kalibiereinrichtung zugeführt wird. Wesentlich für die Güte des Endproduktes, d.h. der beschichteten, geschlitzten Buchsenlagerhülse kann die zeitliche Abstimmung der einzelnen Prozesse in den besagten unterschiedlichen Stationen der gesamten Anlage sein. Darüber hinaus ist festzustellen, dass sich im Laufe des Abziehens des Metallbandes von der Metallbandrolle die in das Metallband eingeprägte Krümmung permanent ändert. Insbesondere weist ein Metallbandabschnitt zu Beginn des Abrollens einer Metallbandrolle eine sehr viel geringere Krümmung auf als ein Abschnitt am Ende des aufgerollten Metallbandes. Zur Bereitstellung einer konstanten Maßhaltigkeit der hergestellten Buchsenlagerhülsen kann vorgesehen sein, in Bewegungsrichtung des Blechstreifens hinter der Walzprofiliereinrichtung eine Richteinrichtung zur Erzeugung einer vorbestimmten Krümmung des Blechstreifens senkrecht zur Längs- und senkrecht zur Querrichtung des Blechstreifens vorzusehen und in Bewegungsrichtung des Blechstreifens hinter der Walzprofiliereinrichtung eine Bandfördereinrichtung anzuordnen. Die Erzeugung einer Krümmung im Blechstreifen senkrecht zur Längsrichtung und senkrecht zur Querrichtung des Blechstreifens kann dabei dazu dienen, eine vorgegebene Krümmung im Blechstreifen zu erzeugen, welche größer ist als die im abgerollten Blechstreifen unabhängig vom Abrollort auf der Bandrolle, so dass der Blechstreifen nach Durchlaufen der Richteinrichtung eine definierte, vorbestimmte Krümmung aufweist, auf welche nachgeschaltete Bearbeitungs- bzw. Umformstationen eingestellt werden können. Darüber hinaus kann durch das Vorsehen der besagten Richteinrichtung in Bewegungsrichtung des Blechstreifens hinter der Walzprofiliereinrichtung eine Art Bandschleife bereitgestellt werden, welche einen Art "Blechstreifenpuffer" für die Steuerung der Walzprofiliereinrichtung und/oder der Bandfördereinrichtung auf der Grundlage der Länge der Schleife bzw. der Schleifentiefe ermöglicht.

Zweckmäßigerweise kann vorgesehen sein, in Bewegungsrichtung des Blechstreifens hinter der einen Richteinrichtung und vor der Bandfördereinrichtung eine weitere Richteinrichtung zur Rückumformung der Krümmung des Blechstreifens senkrecht zur Längs- und zur Querrichtung des Blechstreifens und zur Ausrichtung des Blechstreifens relativ zur Bandfördereinrichtung vorzusehen. Mit dieser Maßnahme kann erreicht werden, dass ein ideal ebener und optimal zur Bandfördereinrichtung ausgerichteter Blechstreifen für die weitere Bearbeitung in der Anlage bereitgestellt ist.

Es sei darauf hingewiesen, dass die Angabe "Walzprofiliereinrichtung" breit auszulegen ist und umfasst allgemein eine Einrichtung zur Profilierung des Blechstreifens mittels Profilierungsrollen.

Die Erfindung wird im Folgenden durch das Beschreiben einer Ausführungsform sowie weitere Abwandlungen unter Bezugnahme auf die beiliegenden Figuren erläutert, wobei
- Figur 1: in einer Übersichtsdarstellung eine Produktionsanlage zur Durchführung eines erfindungsgemäßen Verfahrens zur Herstellung einer beschichteten, geschlitzten Buchsenlagerhülse,
- Figur 2: einen ersten Ausschnitt der in Figur 1 dargestellten Anlage mit einer Walzprofilierstation und vorgeschalteter Bandführung, sowie nachgeschalteter Richtstation,
- Figur 3: eine Ansicht in Bandbewegungsrichtung auf die Walzprofilierstation,
- Figur 4: einen weiteren Ausschnitt der in Figur 1 dargestellten Anlage mit einer Sichteinrichtung, einer Fördereinrichtung, sowie einer Trennschereneinrichtung,
- Figur 5a: eine Betriebssituation in der Blechbiegeeinrichtung, bei welcher ein Blechstreifen zwischen einem Wickeldorn und einer Umlenkwalze eingeführt wird,
- Figur 5b: eine der Situation gemäß Figur 5a nachfolgende Betriebssituation, in welcher der eingeführte Blechstreifen umgeformt wird,
- Figur 6: eine dritte Ausschnittsansicht der in Figur 1 dargestellten Anlage, mit der Trenneinrichtung, der Zwei- Walzenbiegeeinrichtung, sowie der Kalibriereinrichtung,
- Figur 7a: eine erste Betriebssituation in der Kalibriereinrichtung, in welcher ein Blechstreifen axial in eine Kalibrierbacke eingeführt ist,
- Figur 7b: eine der Situation gemäß Figur 7a nachfolgende Betriebssituation, in welcher die Kalibrierbacken aufeinander zu bewegt werden,
- Figur 7c: eine der Situation gemäß Figur 7b nachfolgende Betriebssituation, in welcher die Kalibrierbacken die Hülse vollumfänglich umschließen, und
- Figur 8: ein fertiggestelltes Buchsenlager in einer perspektivischen Ansicht mit zwei gemäß dem erfindungsgemäßen Verfahren hergestellten Buchsenlagerhülsen
zeigen.

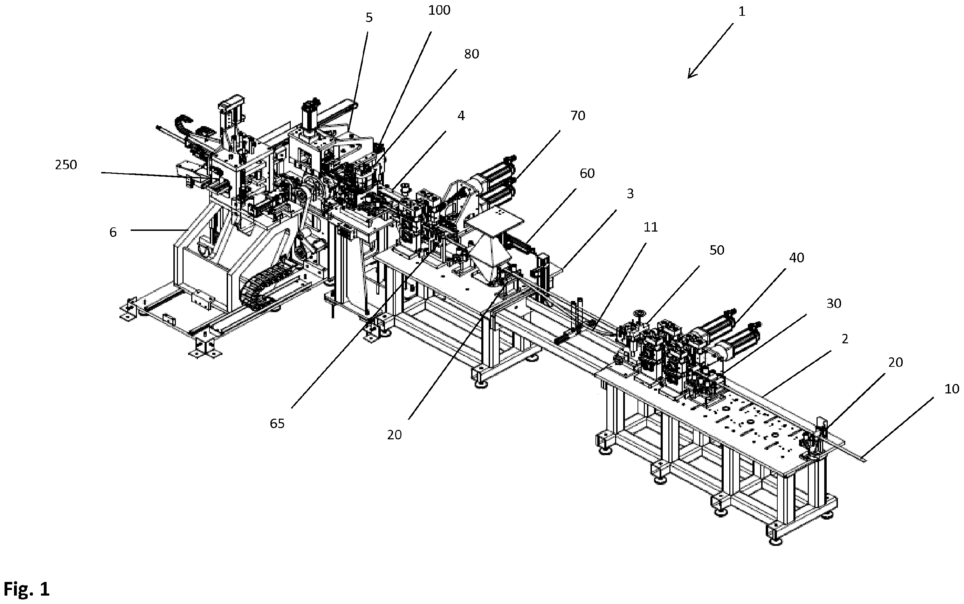

Figur 1 zeigt in einer perspektivischen Ansicht eine beispielhafte Produktionsanlage 1, wie sie zur Umsetzung des erfindungsgemäßen Verfahrens verwendet werden kann. Der Bandabroller, auf dem die, mit einem Haftvermittler beschichtete und eine vorgegebene Breite entsprechend der Höhe der herzustellenden Buchsenlagerhülse aufweisende Metallbandrolle aufgerollt abgelegt und von diesem abrollbar ist, ist in der Figur nicht dargestellt. Eine derartige Metallbandrolle, welche auch als "Coil" bezeichnet wird, kann eine Metallbandlänge von mehreren hundert Metern umfassen. Vom Bandabroller wird das Metallband 10 zunächst zu zwei Bandführstationen 20, 30 geführt, in welchen das sich abwickelnde Band sowohl horizontal als auch vertikal ausgerichtet wird. Nach der Bandführstation 30 bewegt sich das Band zu einer Walzprofiliereinrichtung 40, in welcher das Band in der beschriebenen Ausführungsform an seinen beiden Längskanten jeweils eine S-förmige Profilierung erhält.

Der Walzprofilierstation 40 nachgeschaltet, ist eine Richtstation 50, welche eine definierte Krümmung senkrecht zur Längs- und Querstreckung des Bandes 10 in dieses einbringt, sodass sich die in Figur 1 angegebene Bandschleife 11 ergibt, das Band wird in Bewegungsrichtung dann einer weiteren Bandführstation 20 zugeführt. In der beschriebenen Ausführungsform ist die durch die Richtstation 50 in vertikaler Richtung eingebrachte Krümmung des Bandes größer als die des vom Bandabroller abgerollte Bands, sodass nach Durchlaufen der Richtstation 50 eine vorgegebene Krümmung vorliegt, die in einer nachfolgenden Richtstation, auf die untenstehend noch weiter eingegangen wird, kompensiert werden kann. Darüber hinaus dient die Bandschleife 11 in der beschriebenen Ausführungsform als Bandpuffer zur Steuerung des Transportes des Bandes 11, sodass eventuell in einer Station auftretende Verzögerung bei der Bearbeitung oder Fortbewegung des Bandes kompensierbar sind. Die Bandschleife 11 kann in der beschriebenen Ausführungsform über den Schleifensensor 55 erfasst werden, welcher den vertikalen Durchrang des Bandes misst. Zur Klarheit der Darstellung ist im Bereich der Bandschleife 11 auch ein durchgehendes Band gezeichnet, wodurch in der Figur zur Veranschaulichung die beiden Extremstellungen des Bandes in diesem Bereich angegeben sind.

Nach der Kaltverformung in der Walzprofilierstation 40 und der Richtstation 50 läuft das Band über eine Bandführstation 20 durch eine geschlossene Sichtstation 60, in welcher Ober- und Unterseite des Bandes jeweils von einer Kamera zur Qualitätskontrolle der Profilierung, sowie der Oberfläche bzw. der Beschichtung des Bandes aufgenommen wird. Mittels einer Bildverarbeitung wird die Güte der bisherigen Umformschritte erfasst und zur Steuerung der gesamten Anlage verwendet, insbesondere zum Einstellen der Geschwindigkeit des Bandes.

Der Sichtstation 60 nachgeschaltet, ist eine weitere Richtstation 65 umfassend einer Mehrzahl von horizontalen und vertikalen Walzen zwischen welchen das Band 10 geführt ist und in welchem die definierte, in der Richtstation 50 eingebrachte Krümmung des Bandes wieder zurückgängig gemacht wird. Die Richtstation 65 dient gleichzeitig als Führungsstation zur Ausrichtung des Bandes vor der Einführung in eine Förderstation 70. Diese Förderstation weist Servowalzen in Form einer Ober- und einer Unterwalze auf, zwischen denen das Band geführt ist. Beide Walzen sind angetrieben und dienen somit zur Bewegung des Bandes in die Trennscherenstation 80. In der Trennschere, die in der beschriebenen Ausführungsform hydraulisch betrieben ist, werden vom Metallband Blechstreifen mit einer vorgegebenen Länge abgelängt, die zusammen mit der im nachfolgenden Umformprozess gestalteten Schlitzbreite den Umfang bzw. den Durchmesser der Hülse festlegt.

Die abgelängten Blechstreifen werden mittels einer in Figur 1 nicht erkennbaren Fließbandeinrichtung zur nachfolgenden Zweiwalzen- Blechbiegestation, das heißt der Umformstation 100 transportiert, in welcher die eigentliche Umformung der abgelängten Blechstreifen in eine zylinderförmige Hülse mit vorgegebenem Abstand bzw. Spalt zwischen den umfangsseitigen Stirnflächen durchgeführt wird.

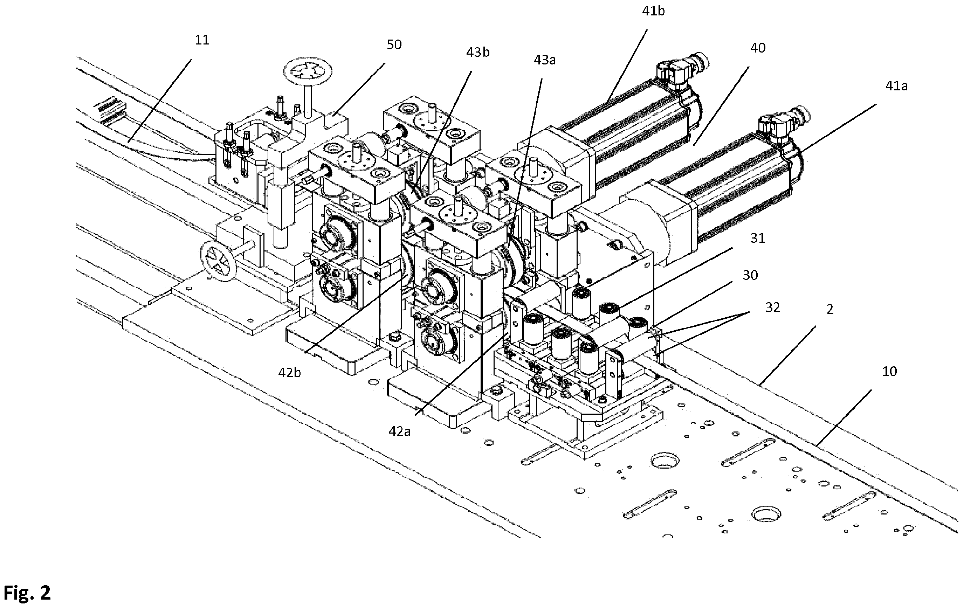

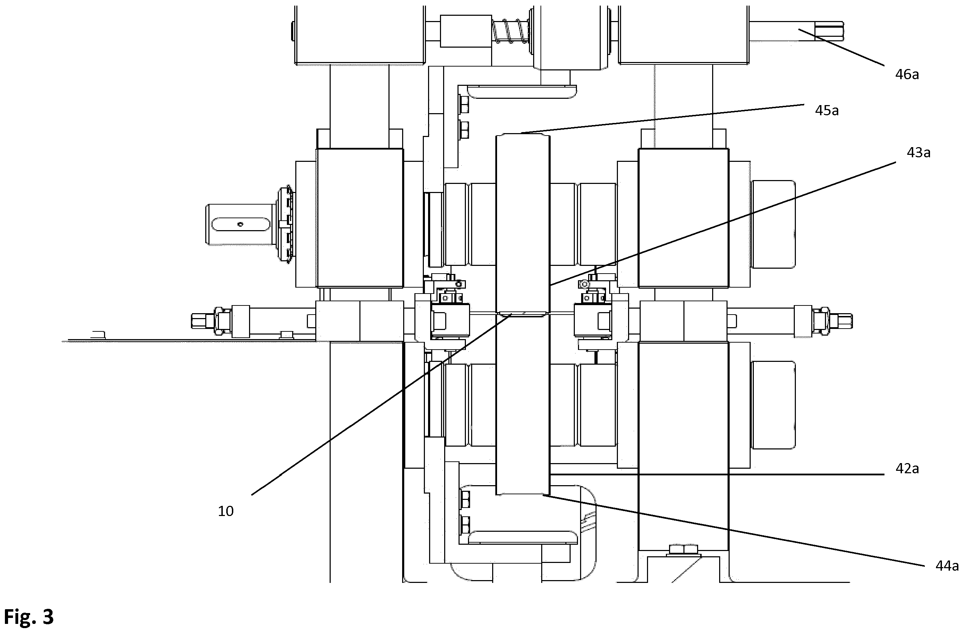

Eine detailliertere Ansicht der in Figur 1 dargestellten Anlage mit Bezug auf die Walzprofilierstation 40 mit vorgeschalteter Bandführstation 30 und nachgeschaltete Richtstation 50 zeigt Figur 2. Die Bandführstation 30 weist hier sechs vertikal angeordnete Walzen 31, sowie die vier horizontale Walzen 32 auf, zwischen welchen das Band 10 geführt und der Walzprofilierstation 40 zugeführt wird. Diese umfasst in der beschriebenen Ausführungsform zwei Stationseinheiten, aufweisend jeweils eine mittels eines Servomotors 41a, b angetriebene Unterwalze 42a, b und eine Oberwalze 43a, b. Die Oberwalzen 43a, b sind jeweils über eine Spindelzustellung an das Band 10 anpressbar, wobei sich beide Oberwalzen jeweils über den Reibschluss zum Band 10 drehen. Sowohl die Unterwalzen 42a, b, als auch die Oberwalzen 43a, b, sind entsprechend der Sollprofilierung des Bandes konturiert, siehe Figur 3, welche eine Frontalansicht auf die Walzprofilierstation 40 in Bandbewegungsrichtung angibt.

Wie in Figur 3 erkennbar, verläuft das Band 10 zwischen Unter- und Oberwalze 42a und 43a und wird durch diese profiliert. Hierzu ist in der beschriebenen Ausführungsform die Mantelfläche 44a der Unterwalze 42a an ihren beiden Längskanten S-förmig konturiert und in komplementärer Weise die Mantelfläche 45a der Oberwalze 43a, sodass beide Walzen mit ihren profilierten Mantelflächen 45a, 44a an den beiden Hauptflächen des beschichteten Bandes 10 anliegen und so die angegebenen Konturierungen einbringen. Dabei dienen die erste Profiliereinheit zur Vorprofilierung und die zweite Einheit zur Gestaltung der Sollprofilierung im Band 10. Der Anpressdruck der oberen, nicht angetriebenen Walze 43a, wird in der beschriebenen Ausführungsform jeweils über eine Spindel eingestellt, wobei in der Figur die Spindelachse 46a bezeichnet ist.

Wieder zurückkommend auf Figur 2 ist in Bewegungsrichtung des Bandes der Walzprofilierstation 40 eine Richtstation 50 nachgeschaltet, in welcher das profilierte Band wiederum zwischen Walzen verläuft, über deren Zustellung eine definierte Krümmung des Bandes zur Erzeugung einer Bandschleife 11 eingestellt ist. Wie schon obenstehend mit Bezug auf Figur 1 erläutert, ist in Figur 2 das Band auch in einer horizontalen Ausrichtung gezeigt, das heißt, in einer Situation in welcher das Band nicht durchhängt und insofern keine Bandschleife bildet.

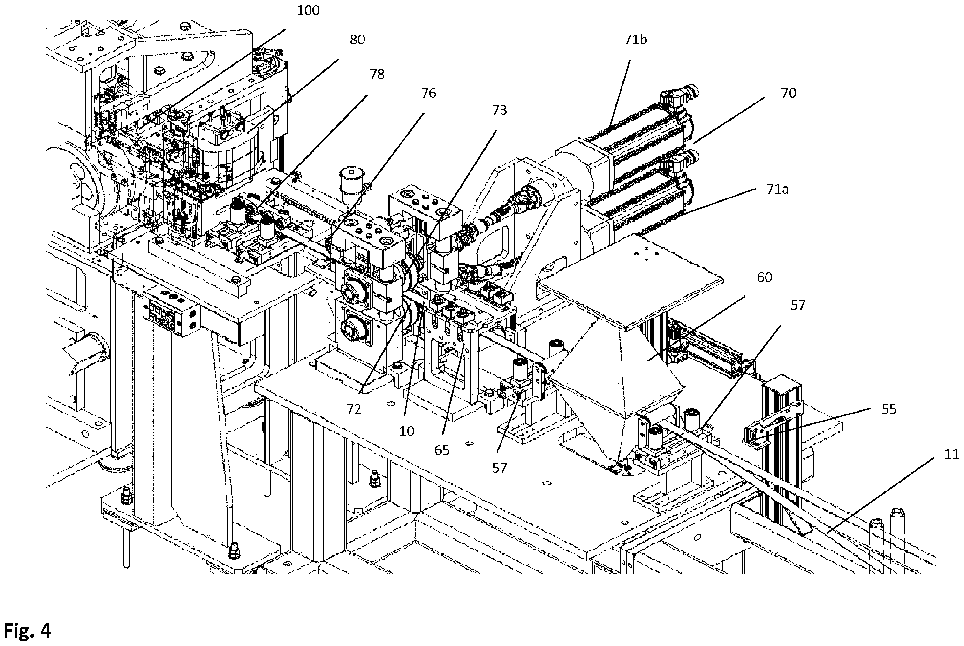

Eine weitere detailliertere Ausschnittansicht der in Figur 1 dargestellten Anlage zeigt Figur 4. Das Band durchläuft nach der Richteinheit 50 eine weitere Bandführstation 57, in weleher das Band in vertikaler als auch in horizontaler Richtung ausgerichtet wird. Es durchläuft eine Sichtstation 60, in welcher das Band sich durch ein mittels zweier pyramidenförmigen Teilen gebildetes Gehäuse bewegt, in welchem das Band sowohl unter- als auch oberseitig mit jeweils einer Kamera erfasst wird. Mittels Bildverarbeitung werden Daten über die Oberflächenqualität von Ober- und Unterseite des Bandes erzeugt, die zur Steuerung der gesamten Anlage verwendet werden können, beispielsweise zum Einstellen des Durchsatzes der gesamten Anlage.

Nach Durchlaufen einer weiteren Bandführstation wird das Band in der beschriebenen Ausführungsform einer Richtstation 65 zuführt, in welcher die sich durch die Kaltverformung des Bandes in der Walzprofilierstation 40 sowie der Richtstation 50 ergebende Krümmung wieder entfernt und gleichzeitig das Band sowohl in vertikaler als auch in horizontaler Richtung ausgerichtet wird, bevor das Band in die Förderstation 70 eingezogen wird. Die Förderstation 70 umfasst eine, von einem Servomotor 71a angetriebene Unterwalze 72, sowie eine, von einem Servomotor 71b angetriebene Oberwalze 73, zwischen welchen das Band 10 eingezogen wird, wobei über Reibschluss die notwendige Kraft auf das Band übertragen wird, um dieses durch die gesamte Produktionsanlage und bis zur nachfolgenden Trennscherenstation 80 zu bewegen. Sowohl die Ober- als auch die Unterwalze sind an die in der Profilierstation 40 eingebrachte Konturierung des Bandes 10 angepasst, wobei darüber hinaus die Oberwalze 73 pneumatisch zugestellt wird, um eine Beschädigung der Konturierung des Bandes zu vermeiden.

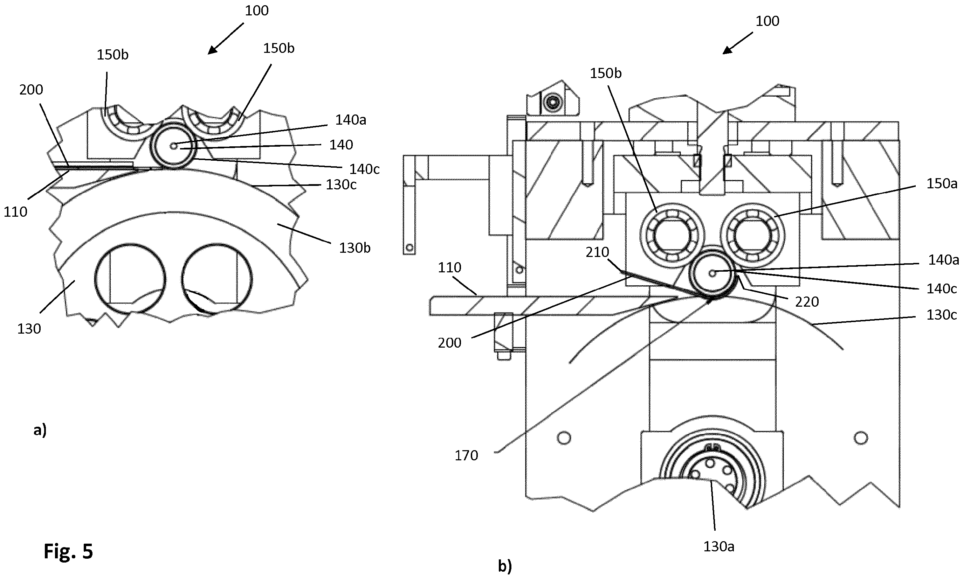

Zwischen Förderstation 70 und der hier hydraulisch arbeitenden Trennschere 80 ist eine Zuführeinheit 78 angeordnet. Dabei umfasst die Anlage direkt nach der Förderstation 70 ein auf den Band abrollendes Messrad 76 zur exakten Steuerung der abgelenkten Blechstreifen. Zwischen der Trennschere 80 und der nachfolgenden Umformstation 100 ist eine nicht erkennbarer Fließbandvorrichtung vorgesehen, welche die von der Trennschere 80 abgelenkten Blechstreifen nacheinander in eine Aufnahme 110 der Umformstation 100 transportiert, siehe Figur 5a, b.

Die Umformstation 100 weist als wesentliche Bestandteile eine über einen Motor 120 angetriebene Umformwalze 130 aus einem elastischen Material, beispielsweise Polyurethan, auf. Auf der Umformwalze 130 rollt ein Wickeldorn 140 ab, der bezüglich seiner Achse 140a parallel zur Achse 130a der Umformwalze 130 ausgerichtet ist. In der beschriebenen Ausführungsform liegt der Abstandsvektor zwischen den Achsen 130a und 140a rein vertikal.

In der beschriebenen Ausführungsform ist der Wickeldorn 140 entsprechend der Anlagefläche zum Blechstreifen 200 konturiert.

Die Umformstation 100 ist eingerichtet, in vertikaler Richtung eine Kraft auf den Wickeldorn 140 auszuüben, sodass dieser in den Walzenkörper 130b der Umformwalze 130 eingedrückt wird. In der beschriebenen Ausführungsform ist der Wickeldorn aus einem gehärteten Werkzeugstahl hergestellt. Die Umformstation ist zur Aufbringung einer vertikalen Kraft mittels einer pneumatischen Einrichtung im Bereich zwischen 5 kN und 10 kN eingerichtet. Der über die Einführrampe 110 in den Kontaktbereich zwischen Umformstation und Wickeldorn eingeführte Blechstreifen wird aufgrund der gerichteten Kräfte auf den Streifen in eine geschlitzte Lagerhülse umgeformt. Details werden nachfolgend mit Bezug auf die Figuren 5a, b erläutert.

Figur 5a zeigt einen vergrößerten Ausschnitt der Umformeinrichtung 100, aus welchem die Lage des Blechstreifens 200 beim Einführen über die Aufnahme 110 in den Umformbereich 170 (siehe Fig. 5b), der durch den Kontaktbereich der Umformwalze 130 und des Wickeldorns 140 gebildet ist, hervorgeht.

Der Wickeldorn 140 ist über Stützlünetten 150a, 150b gelagert und rollt mit seiner Mantelfläche 140c auf der Mantelfläche 130c der Umformwalze 130 ab, die in der Darstellung zur Drehung im Uhrzeigersinn angetrieben wird.

Mit weiterem Vorschub des Blechstreifens 200 wird dieser von der Umkehrwalze 130 und dem Wickeldorn 140 erfasst, in den Umformbereich 170 eingeführt und zwischen diesen mitgeführt. Figur 5b zeigt die Situation, nachdem der Blechstreifen von der Umkehrwalze 130 bzw. dem Umkehrdorn 140 erfasst und in den Kontaktbereich zwischen Walze und Dorn eingeführt ist. Aufgrund des zum gehärteten Wickeldornkörper 140 elastischen Materials des Walzenkörpers 130b wird das elastische Material der Umformwalze verdrängt, sodass eine Umschlingung des Blechstreifens 200 durch die Umformwalze 130 erfolgt, die zur Umformung des Streifens führt.

In einer Ausführungsform kann vorgesehen sein, das druckbelastete Abrollen des Wickeldorns auf der Umformwalze so auszuführen, dass schon bei nicht eingeführtem Blechstreifen eine Umschlingung des Wickeldorns 140 durch den Walzenkörper 130b der Umformwalze erfolgt.

Die in Figur 5b angegebene Situation des Umschlingens des Wickeldorns durch den umgeformten Blechstreifen setzt sich weiter fort bis der gesamte Blechstreifen um den Dorn 140 gewickelt ist. Die beiden Stirnflächen 210, 220 des Blechstreifens weisen dann als umfangsseitigen Stirnflächen der Hülse den vorgegebenen Abstand zur Ausbildung eines Längsschlitzes der Hülse, je nach Ausführungsform beispielsweise zwischen 5 bis 12 mm auf.

Nachdem der Blechstreifen auf dem Dorn aufgewickelt ist, kann zur Erzielung einer hohen Maßhaltigkeit der Hülse die Umformwalze gleichförmig weitergedreht werden, bis der umgeformte Metallstreifen weitere Male, insbesondere zweimal, den Kontaktbereich 170 zwischen Wickeldorn 130 und Umformwalze 140 vollständig durchlaufen hat.

In der beschriebenen Ausführungsform bewegt sich der Blechstreifen 200 genau einmal um den Wickeldorn. Der Antrieb der Umformwalze wird genau dann gestoppt, wenn sich der Schlitz der Hülse innerhalb des Umfangsbereichs befindet, in welchem der Wickeldorn 140 durch den Walzenkörper 130b umschlingt ist. Der Walzenkörper ragt in dieser Situation dort radial etwas in den Schlitz hinein, sodass die Hülse definiert orientiert und fixiert ist, sodass sie orientierungssicher von einem Greifer aufgenommen werden kann.

Nach der Fertigstellung der Umformung kann durch Entlastung der Lünetten 150a, b die Kraftbeaufschlagung auf den Wickeldorn 140 aufgehoben und dann die fertiggestellte Hülse parallel zur Achse 140a über einen axial beweglichen und in der Figur nicht gezeigten Greifer aus der Umformstation 100 bewegt werden.

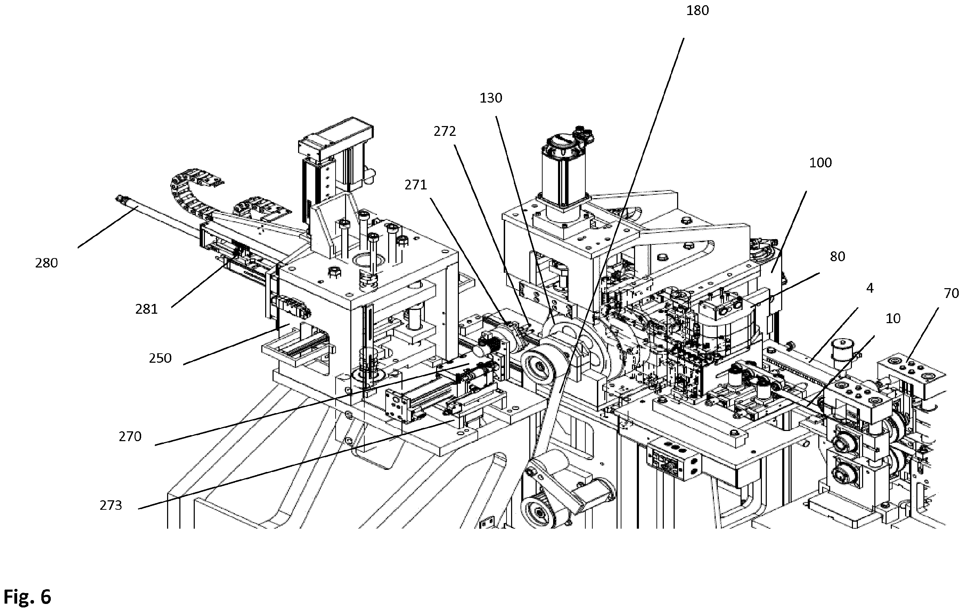

Figur 6 zeigt einen dritten Ausschnitt aus der Produktionsanlage gemäß Figur 1 mit Fokus auf die Zweiwalzen- Blechbiegereinrichtung bzw. Umformstation 100, sowie die Kalibrierstation 250. Erkennbar wird die Umformwalze 130 über einen Zahnriemen 180 von einen im Gestell 4 unterhalb der Zweiwalzen- Blechbiegereinrichtung 100 angeordneten Motor angetrieben. Der Wickeldorn bzw. Umformdorn 140 ist in der in Figur 6 angegebenen Betriebssituation nicht sichtbar. Auch nicht sichtbar ist ein erster Greifer, welcher die in der Umformstation 100 erzeugte Hülse an ihrer Außenmantelfläche greift und in axialer Richtung zur Umformwalze bzw. zum Wickeldorn dem Greifer 270 übergibt. Dieser weist zur Umformstation 100 hingerichtet einen im Greiferkopf 271 mit zugeordneten Greiferfinger 272 auf, welche die fertiggestellte Hülse vom nicht dargestellten ersten Greifer übernehmen. Dabei greifen die Finger 272 in das Innere der Hülse ein und werden zur Klemmung der Hülse radial nach außen bewegt. Nachdem die Hülse übergeben wurde, fährt der zweite Greifer 270 in der Darstellung der Figur 6 in der beschriebenen axialen Richtung etwas nach hinten und dreht dann entgegen dem Uhrzeigersinn um 90° zur Übergabe der Hülse in die Kalibrierstation 250. Hierzu ist der Greifer 270 drehbar auf einem Greifersockel 273 gelagert. Die Kalibrierstation 250 weist einen weiteren, in der Figur nicht vollständig angegebenen Greiferarm 280 auf, der an seinem der Kalibrierstation 250 zugewandten Ende einen Greiferkopf 281 umfasst, mit welchem die kalibrierte Hülse an der zum zweiten Greifer 270 gegenüberliegenden Stirnseite der Kalibrierstation 250 entnommen wird, um die fertiggestellte Buchsenlagerhülse abzulegen. Zweckmäßigerweise werden die fertiggestellten Hülsen auf ein nicht dargestelltes Fließband abgesetzt.

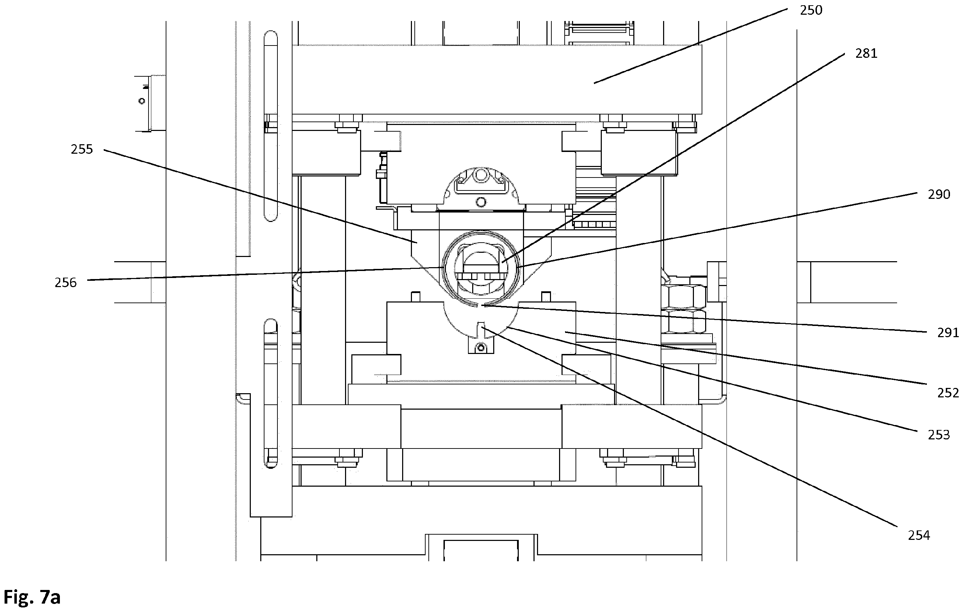

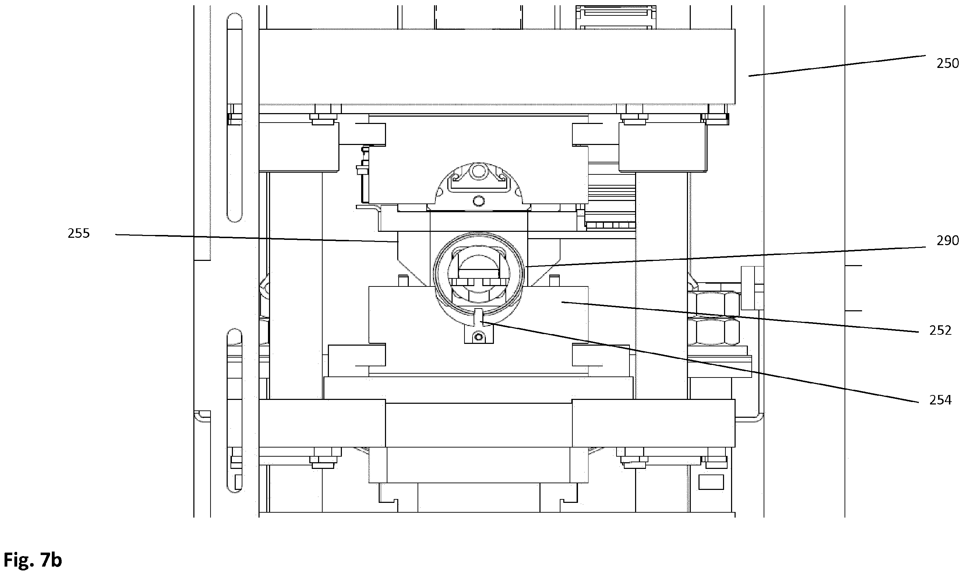

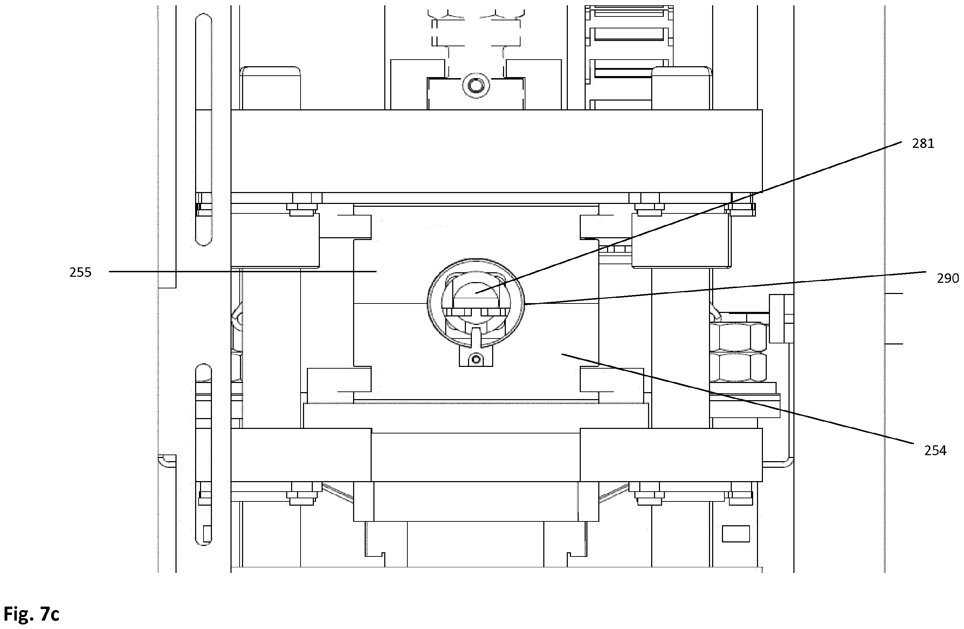

Die Kalibrierung der Hülse in der Kalibrierstation 250 soll nun mit Bezug auf die Figuren 7a bis c näher erläutert werden. Die Kalibrierstation 250 umfasst zwei etwa halbschalenförmige Kalibrierbacken 252, 255, die jeweils eine Anlagefläche 253, 256 zur Festlegung der Außenmantelfläche bzw. deren Maße der Hülse 290 bereitstellen. In der in Figur 7a angegebenen Betriebssituation wurde die geschlitzte, profilierte Hülse 290 durch den Greifer 270, wie beschrieben, in die obere Kalibrierbacke axial eingesetzt. Aufgrund ihrer umfänglichen Erstreckung der oberen Kalibrierbacke 255 kann die Hülse 290 - wie aus der Figur ersichtlich - nicht aufgrund ihrer Gewichtskraft aus der oberen Kalibierbacke herausfallen, sondern wird durch den Hinterschnitt bzw. die Anlagefläche 256 gehalten. Erkennbar ist die Hülse 290 in Bezug auf den Schlitz 291 zum radial und in axialer Richtung verlaufenden Keil 254 der unteren Kalibrierbacke 252 ausgerichtet. Beide Kalibrierbacken werden nun relativ zueinander, hier in vertikaler Richtung bewegt, sodass der Keil 254 in dem Schlitz 291 der Hülse 290 eingreift, siehe Figur 7b. Erst mit der in Figur 7b dargestellten Betriebssituation erfolgt nachfolgend beim weiteren Aufeinanderzubewegen beider Kalibrierbacken 252, 255 eine leichte plastische Verformung der Hülse 290, das heißt eine Kalibrierung des Werkstückes. Beide Kalibrierbacken werden weiter aufeinander zubewegt, bis sich die in Figur 7c angegebene Betriebssituation ergibt, in welcher die Hülse vollflächig an beiden Kalibrierbacken anliegt. Erkennbar sind auch beide Kalibrierbacken entsprechend der Profilierung der Hülse 290 konturiert, sodass in der in Figur 7c angegebenen Endposition die Profilierungsabschnitte der Hülse durch die Konturierung der Kalibrierbacken in der gezeigten Ansicht verdeckt sind. In der Figur erkennbar ist der Greiferkopf 281 des Entnahmegreifers 270, welcher nach dem Öffnen der Kalibrierstation die kalibrierte Buchsenlagerhülse innenseitig ergreift und aus der Kalibrierstation entnimmt.

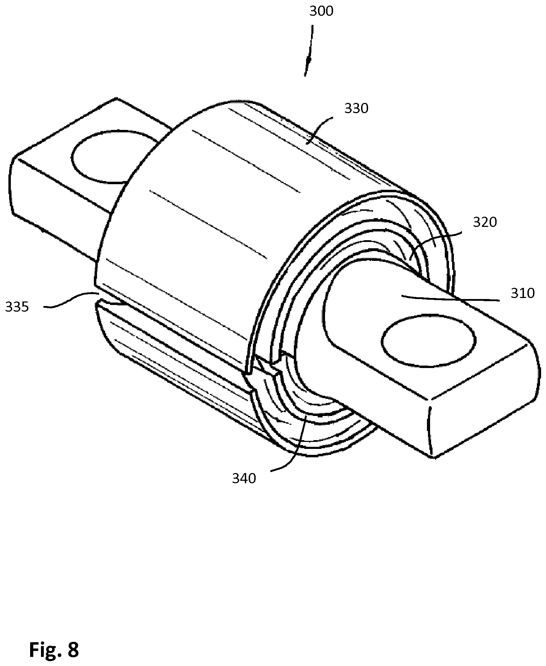

Figur 8 zeigt ein Buchsenlager 300 umfassend einen metallenen Kern 310, einen Elastomerlagerkörper 320, eine äußere Hülse 330, die einen Längsschlitz oder -spalt 335 aufweist, sowie eine innere, auch geschlitzte Zwischenlagenhülse 340, die im Elastomerkörper angeordnet ist, wobei beide Hülsen 330, 340 mit dem obenstehend beschriebenen Verfahren hergestellt sind. Die jeweilige Profilierung beider Hülsen an einer der Längskanten ist vergleichsweise schwach ausgebildet und in der Figur nicht erkennbar. Zur Gestaltung des Buchsenlagers 300 wird der Kern 310 und die erfindungsgemäß hergestellte geschlitzte Buchsenlagerhülse 330 sowie die in gleicher Weise, jedoch mit vermindertem Durchmesser und verminderter Spaltbreite hergestellte Zwischenlagenhülse 340 in eine entsprechend ausgebildete Spritzgießform eingesetzt und zwischen allen Teilen das Elastomer eingespritzt. Durch einen nachfolgenden Vulkanisiervorgang entsteht eine stoffschlüssige Verbindung zwischen dem Elastomer und den anderen Teilen des Lagers. Das Lager 300 ist unter radialer Vorspannung in ein zugeordnetes Lagerauge einsetzbar, wobei im Einbauzustand die längsverlaufenden Schlitze im Elastomerkörper 320 bzw. in den Hülsen 330, 340 geschlossen sind.

### Bezugszeichenliste

- 1: Produktionsanlage
- 2 bis 6: Gestell
- 10: Band
- 11: Bandschleife
- 20: Bandführstation
- 30: Bandführstation
- 31, 32: Führungswalzen
- 40: Walzprofilierstation/ Walzprofiliereinrichtung
- 41a, b: Servomotor
- 42a,b: Unterwalze
- 43a, b: Oberwalze
- 44a: Mantelfläche der Unterwalze
- 45a: Mantelfläche der Oberwalze
- 46a: Spindel
- 50: Richtstation/ Richteinrichtung
- 55: Schleifensensor
- 57: Band für Station
- 60: Sichtstation
- 65: Richtstation/ Richteinrichtung
- 70: Förderstation/ Fördereinrichtung
- 71a, b: Servomotor
- 72: Untere Antriebswalze
- 73: Obere Antriebswalze
- 76: Messrad
- 78: Zuführeinheit
- 80: Trennscherenstation
- 100: Zweiwalzen- Blechbiegestation/ Umformstation
- 110: Aufnahme
- 120: Motor
- 130: Umformwalze
- 130a: Achse
- 130b: Walzenkörper
- 130c: Mantelfläche des Walzenkörpers
- 140: Wickeldorn, Umformdorn
- 140a: Achse
- 140b: Wickeldornkörper
- 140c: Mantelfläche des Wickeldornkörpers
- 150a, b: Lünette
- 170: Umformbereich
- 180: Zahnriemen
- 200: Blechstreifen
- 210, 220: Umfangsseitige Stirnfläche
- 250: Kalibrierstation
- 252: Untere Kalibrierbacke
- 253: Anlagefläche
- 254: Keil/ Vorsprung
- 255: Obere Kalibrierbacke
- 256: Anlagefläche
- 270: Greifer
- 271: Greiferkopf
- 272: Greiffinger
- 273: Greifersockel
- 280: Greiferarm des Entnahmegreifers
- 281: Greiferkopf
- 290: Profilierte Hülse
- 300: Buchsenlager
- 310: Kern
- 320: Lagerkörper
- 330: Buchsenlagerhülse, Außenhülse
- 335: Schlitz, Spalt
- 340: Buchsenlagerhülse, Zwischenlagenhülse

## Patentansprüche

1. Verfahren zur Herstellung einer zumindest einseitig mit einem Haftvermittler beschichteten, in Längsrichtung geschlitzten Buchsenlagerhülse (330, 340), deren umfangsseitigen Stirnflächen einen vorgegebenen Abstand von mehreren Millimeter zueinander aufweisen, umfassend die Schritte:
- Bereitstellen einer, auf einem Bandabroller angeordneten Metallbandrolle, wobei das Metallband (10) zumindest einseitig mit einem Haftvermittler beschichtet ist;
- Abrollen des Metallbandes (10) und Zuführen des beschichteten Metallbandes zu einer Walzprofiliereinrichtung (40), in welcher das Metallband zwischen rotierenden Ober- und Unterrollen (42a, b, 43a, b) längsprofiliert wird;
- Zuführen des beschichteten, längsprofilierten Metallbandes (10) an eine Trenneinrichtung, insbesondere eine Trennschereneinrichtung (80);
- Ablängen eines beschichteten, längsprofilierten Blechstreifens (200) mit vorgegebener Länge in der Trenneinrichtung;
- Zuführen des beschichteten, längsprofilierten Blechstreifens (200) in eine 2 Walzen-Blechbiegeeinrichtung, bei welcher ein Wickeldorn (140) in radialer Richtung kraftbeaufschlagt auf dem Umfang einer, einen zum Wickeldorn (140) elastischen Walzenkörper (130b) aufweisenden Umformwalze (130) abrollt, wobei die Achsen (140a, 130a) des Wickeldorns und der Umformwalze (130) im Wesentlichen parallel zueinander verlaufen und wobei die Mantelfläche des Wickeldorns entsprechend der Profilierung des Blechstreifens konturiert ist und der Durchmesser der Umformwalze (130) mehr als das Dreifache des Durchmesser des Wickeldorns (140) beträgt;
- Umformen des beschichteten, längsprofilierten Blechstreifens (200) in der Blechbiegeeinrichtung in eine geschlitzte Hülse (330, 340) durch das Bewegen des Blechstreifens senkrecht zu den Achsen (140a, 130a) des Wickeldorns (140) und der Umformwalze (130) und zwischen diesen, wodurch der Blechstreifen um den Wickeldorn gewickelt wird,
- relatives voneinander Wegbewegen von Umformwalze (130) und Wickeldorn (140) und axiales Abführen der geschlitzten Hülse vom Wickeldorn;
- Aufnehmen und Einsetzen der geschlitzten Hülse in eine Kalibriereinrichtung;
- Kalibrieren der geschlitzten Hülse in der Kalibrierstation in eine kalibrierte geschlitzte Buchsenlagerhülse (330, 340) mit vorgegebenem Abstand der beiden sich gegenüberliegenden Umfangsstirnflächen und vorgegebenem Durchmesser.

2. Verfahren nach Anspruch 1, **dadurch gekennzeichnet, dass** beim Umformvorgang der Wickeldorn (140) von der Umformwalze (130) umschlungen wird, und der Blechstreifen (200) dem Umschlingungsbereich zwischen Umformwalze und Wickeldorn zugeführt wird.

3. Verfahren nach Anspruch 1 oder 2, **dadurch gekennzeichnet, das s** in der Blechbiegeeinrichtung die Umformwalze (130) angetrieben wird, welche über einen Reibschluss den Wickeldorn (140) bewegt.

4. Verfahren nach einem der Ansprüche 1 bis 3,
**dadurch gekennzeichnet, dass** der Wickeldorn (140) einen zylindrischen Walzenkörper (140b) aus gehärtem Werkzeugstahl und die Umformwalze (130) einen zylindrischen Walzenkörper (130b) mit einer Shorehärte A größer 70, insbesondere größer 80 aufweist.

5. Verfahren nach einem der Ansprüche 1 bis 4,
**dadurch gekennzeichnet, dass** der Umformprozess trocken ausgeführt wird.

6. Verfahren nach einem der Ansprüche 2 bis 5,
**dadurch gekennzeichnet, dass** beim Umformprozess der Blechstreifen (200) in der Blechbiegeeinrichtung zumindest einmal um den Wickeldorn (140) herumgeführt wird und die angetriebene Umformwalze (130) gestoppt wird, wenn sich der Schlitzabschnitt der jeweiligen geschlitzten Hülse im Bereich des Umschlingungsbereichs zwischen Umformwalze (130) und Wickeldorn (140) befindet.

7. Verfahren nach einem der Ansprüche 1 bis 6,
**dadurch gekennzeichnet, dass** die geschlitzte Hülse zum Kalibrieren in eine Kalibrierbacke (255) eingesetzt und eine weitere Kalibrierbacke (252) relativ zur ersten Kalibrierbacke linear und senkrecht zur Achse der Hülse bewegt wird.

8. Verfahren nach Anspruch 7, **dadurch gekennzeichnet, dass** die geschlitzte Hülse so in die eine Kalibrierbacke (255) eingesetzt wird, dass beim Kalibriervorgang ein an der Mantelfläche der anderen Kalibrierbacke (252) radial nach innen und sich axial erstreckender Vorsprung in den Schlitz Hülse eingreift.

9. Verfahren nach Anspruch 7 oder 8, **dadurch gekennzeichnet, das s** beim Kalibrieren zur Festlegung eines umlaufenden Innenmantelflächenabschnittes der Buchsenlagerhülse ein Kalibrierkern in axialer Richtung in die Hülse eingesetzt wird.

10. Verfahren nach einem der Ansprüche 1 bis 9,
**dadurch gekennzeichnet, dass** in der Walzprofiliereinrichtung im Bereich zumindest einer Längskante des beschichteten Metallbandes (10) eine S-Schlagprofilierung in das Metallband eingebracht wird.

11. Verfahren nach einem der Ansprüche 1 bis 10,
**dadurch gekennzeichnet, dass** in Bewegungsrichtung des Blechstreifens (10) hinter der Walzprofiliereinrichtung (40) eine Richteinrichtung zur Erzeugung einer vorbestimmten Krümmung des Blechstreifens senkrecht zur Längs- und zur Querrichtung des Blechstreifens und in Bewegungsrichtung des Blechstreifens hinter der Walzprofiliereinrichtung eine Bandfördereinrichtung (70) angeordnet sind.

12. Verfahren nach Anspruch 11, **dadurch gekennzeichnet, dass** in Bewegungsrichtung des Blechstreifens hinter der einen Richteinrichtung und vor der Bandfördereinrichtung (70) eine weitere Richteinrichtung (65) zur Rückumformung der Krümmung des Blechstreifens senkrecht zur Längs- und zur Querrichtung des Blechstreifens und zur Ausrichtung des Blechstreifens relativ zur Bandfördereinrichtung (70) angeordnet ist.

## Claims

1. Method for producing a longitudinally slotted bush bearing sleeve (330, 340) coated at least on one side with an adhesion promoter, the circumferential front faces of which have a predetermined distance of several millimeters from each other comprising the steps:
- providing a metal tape roll placed on a tape dispenser, wherein the metal tape (10) is coated at least on one side with an adhesion promoter;
- unrolling the metal strip (10) and feeding the coated metal tape to a roll forming device (40) in which the metal tape is longitudinally profiled between rotating upper and lower rolls (42a, b, 43a, b);
- feeding the coated longitudinally profiled metal tape (10) to a separating device, in particular to a cutting shears device (80);
- cutting to length a coated longitudinally profiled metal strip (200) with a predetermined length in the cutting device;
- feeding the coated longitudinally profiled metal strip (200) to a 2-roll sheet metal bending device in which a winding mandrel (140), that is forced in the radial direction, rolls off on the circumference of a deforming roll (130) that has a roll body (130b) that is resilient to the winding mandrel (140), wherein the axes (140a, 130a) of the winding mandrel and of the deforming roll (130) are substantially parallel to each other and wherein the circumferential surface of the winding mandrel is contoured correspondingly to the profiling of the metal strip and the diameter of the deforming roll (130) is more than three times the diameter of the winding mandrel (140);
- deforming the coated longitudinally profiled metal strip (200) in the bending device into a slotted sleeve (330, 340) by moving the metal strip perpendicularly to the axes (140a, 130a) of the winding mandrel (140) and of the deforming roll (130) and between them so that the metal strip is wound around the winding mandrel;
- moving away the deforming roll (130) and of the winding mandrel (140) relatively from each other and axial removing of the slotted sleeve from the winding mandrel;
- receiving and inserting the slotted sleeve into a calibrating device;
- calibrating the slotted sleeve in the calibrating station into a calibrated slotted bush bearing sleeve (330, 340) with a predetermined distance between the two opposing circumferential front faces and the predetermined diameter.

2. Method according to claim 1, **characterized in that** the winding mandrel (140) is wound around by the deforming roll (130) during the deforming process and the metal strip (200) is fed to the winding area between the deforming roll and the winding mandrel.

3. Method according to claim 1 or 2, **characterized in that** the deforming roll (130), that moves the winding mandrel (140) through a frictional connection, is driven in the sheet metal bending device.

4. Method according to one of the claims 1 to 3, **characterized in that** the winding mandrel (140) has a cylindrical roll body (140b) made of hardened tool steel and the deforming roll (130) has a cylindrical roll body (130b) with a Shore hardness greater than 70, in particular greater than 80.

5. Method according to one of the claims 1 to 4, **characterized in that** the deforming process is performed in the dry state.

6. Method according to one of the claims 2 to 5, **characterized in that**, during the deforming process, the metal strip (200) in the sheet metal bending device is wound at least once around the winding mandrel (140) and the driven deforming roll (130) is stopped when the slit section of the respective slotted sleeve is situated in the area of the winding area between the deforming roll (130) and the winding mandrel (140).

7. Method according to one of the claims 1 to 6, **characterized in that** the slotted sleeve is inserted into a calibration jaw (255) for calibration and a further calibration jaw (252) is moved linearly to the first calibration jaw and perpendicularly to the axis of the sleeve.

8. Method according to claim 7, **characterized in that** the slotted sleeve is inserted into the one calibration jaw (255) in such a way that during the calibration process a projection that extends axially and radially inwards on the circumferential surface of the other calibration jaw (252) engages into the slot of the sleeve.

9. Method according to claim 7 or 8, **characterized in that**, during the calibration, a calibration core is inserted in the axial direction into the sleeve for fixing a peripheral inner circumferential surface section.

10. Method according to one of the claims 1 to 9, **characterized in that** a S-twist profiling is applied to the metal strip in the roll forming device in the area of at least one longitudinal edge of the coated metal strip (10).

11. Method according to one of the claims 1 to 10, **characterized in that** a straightening device for producing a predetermined curvature of the metal strip is placed in the direction of motion of the metal strip (10) behind the roll forming device (40) perpendicularly to the longitudinal and to the transverse direction of the metal strip and a belt conveyor device (70) is placed in the direction of motion of the metal strip behind the roll forming device.

12. Method according to claim 11, **characterized in that** a further straightening device (65) is placed in the direction of motion behind the one straightening device and a in front of the belt conveyor device (70) for reforming the curvature of the metal strip perpendicularly to the longitudinal and to the transverse direction of the metal strip and for aligning the metal strip relative to the belt conveyor device (70).

## Revendications

1. Procédé pour la fabrication d'un manchon de palier (330, 340) fendu dans le sens longitudinal, enduit au moins d'un côté avec un agent d'adhérence, dont les faces frontales périphériques présentent un écart prédéfini de plusieurs millimètres l'une par rapport à l'autre, comprenant les étapes :
- mise à disposition d'un rouleau de ruban métallique placé sur un dérouleur de ruban, le ruban métallique (10) étant enduit au moins d'un côté avec un agent d'adhérence ;
- déroulement du ruban métallique (10) et amenée du ruban métallique enduit à un dispositif de roulage (40) dans lequel le ruban métallique est profilé longitudinalement entre des rouleaux supérieurs et des rouleaux inférieurs rotatifs (42a, b, 43a, b) ;
- amenée du ruban métallique profilé longitudinalement, enduit (10), à un dispositif de séparation, en particulier à une cisaille (80) ;
- coupage à longueur dans la cisaille d'une bande de tôle profilée longitudinalement, enduite (200), à une longueur prédéfinie ;
- amenée de la bande de tôle profilée longitudinalement, enduite (200), à un dispositif de pliage de tôle à deux rouleaux dans lequel un mandrin d'enroulement (140) roule, en étant sollicité par une force dans le sens radial, sur la circonférence d'un cylindre de formage (130) qui présente un corps de cylindre (130b) élastique par rapport au mandrin d'enroulement (140), cependant que les axes (140a, 130a) du mandrin d'enroulement et du cylindre de formage (130) sont sensiblement parallèles l'un à l'autre et la surface enveloppante du mandrin d'enroulement présentant un contour qui correspond au profilage de la bande de tôle et le diamètre du cylindre de formage (130) étant de plus du triple du diamètre du mandrin d'enroulement (140) ;
- formage de la bande de tôle profilée longitudinalement, enduite (200), dans le dispositif de pliage de tôle en un manchon fendu (330, 340) par le déplacement de la bande de tôle perpendiculairement aux axes (140a, 130a) du mandrin d'enroulement (140) et du cylindre de formage (130) et entre ceux-ci si bien que la bande de tôle s'enroule autour du mandrin d'enroulement ;
- éloignement relatif du cylindre de formage (130) et du mandrin d'enroulement (140) l'un de l'autre et enlèvement axial du manchon fendu du mandrin d'enroulement ;
- réception et mise en place du manchon fendu dans un dispositif de calibrage ;
- calibrage du manchon fendu au poste de calibrage en un manchon de palier fendu calibré (330, 340) avec un écart prédéfini des deux faces frontales périphériques opposées et avec un diamètre prédéfini.

2. Procédé selon la revendication 1, **caractérisé en ce que**, lors de l'opération de formage, le mandrin d'enroulement (140) est encerclé par le cylindre de formage (130) et la bande de tôle (200) est amenée à la zone de cerclage entre le cylindre de formage et le mandrin d'enroulement.

3. Procédé selon la revendication 1 ou 2, **caractérisé en ce que** le cylindre de formage (130) qui déplace le mandrin d'enroulement (140) par une liaison par friction est entraîné dans le dispositif de pliage de tôle.

4. Procédé selon l'une des revendications 1 à 3, **caractérisé en ce que** le mandrin d'enroulement (140) présente un corps de cylindre cylindrique (140b) en acier à outil trempé et le cylindre de formage (130) présente un corps de cylindre cylindrique (130b) avec une dureté Shore A supérieure à 70, en particulier supérieure à 80.

5. Procédé selon l'une des revendications 1 à 4, **caractérisé en ce que** le processus de formage est réalisé à sec.

6. Procédé selon l'une des revendications 2 à 5, **caractérisé en ce que**, lors du processus de formage, la bande de tôle (200) est enroulée au moins une fois autour du mandrin d'enroulement (140) dans le dispositif de pliage de tôle et le cylindre de formage entraîné (130) est arrêté lorsque la section de la fente du manchon fendu respectif se trouve dans la zone de la section d'enroulement entre le cylindre de formage (130) et le mandrin d'enroulement (140).

7. Procédé selon l'une des revendications 1 à 6, **caractérisé en ce que** le manchon fendu est mis en place pour le calibrage dans une mâchoire de calibrage (255) et une autre mâchoire de calibrage (252) est déplacée par rapport à la première mâchoire de calibrage de manière linéaire et perpendiculaire à l'axe du manchon.

8. Procédé selon la revendication 7, **caractérisé en ce que** le manchon fendu est mis en place dans l'une des mâchoires de calibrage (255) de telle manière que, lors de l'opération de calibrage, une saillie, qui s'étend sur la surface enveloppante de l'autre mâchoire de calibrage (252) radialement vers l'intérieur et dans le sens axial, se met en prise dans la fente du manchon.

9. Procédé selon la revendication 7 ou 8, **caractérisé en ce que**, lors du calibrage pour fixer une section de surface enveloppante intérieure périphérique du manchon de palier, un noyau de calibrage est mis en place dans le manchon dans le sens axial.

10. Procédé selon l'une des revendications 1 à 9, **caractérisé en ce qu'**un profilage en double S est ménagé dans le ruban métallique dans le dispositif de roulage dans la zone d'au moins une arête longitudinale du ruban métallique enduit (10).

11. Procédé selon l'une des revendications 1 à 10, **caractérisé en ce qu'**un dispositif de dressage pour produire une courbure prédéfinie de la bande de tôle est placé dans le sens de déplacement de la bande de tôle (10) derrière le dispositif de roulage (40) perpendiculairement au sens longitudinal et au sens transversal de la bande de tôle et un dispositif transporteur à bande (70) est placé dans le sens de déplacement de la bande de tôle derrière le dispositif de roulage.

12. Procédé selon la revendication 11, **caractérisé en ce qu'**un autre dispositif de dressage (65) est placé dans le sens de déplacement de la bande de tôle derrière le dispositif de dressage et devant le dispositif transporteur de bande (70) pour le reformage de la courbure de la bande de tôle perpendiculairement au sens longitudinal et au sens transversal de la bande de tôle et pour l'alignement de la bande de tôle par rapport au dispositif transporteur à bande (70).
